# EUROPEAN PATENT APPLICATION

(11) **EP 4 663 497 A1**
(43) Date of publication of application: **17.12.2025**
(21) Application number: 24181050.6
(22) Date of filing: 10.06.2024
(51) Int. Cl.: B60W 30/182, B60W 50/08, B60N 99/00, B60W 50/00

(54) **COMPUTER-IMPLEMENTED METHOD FOR CONTROLLING A SYSTEM OF A VEHICLE**

(71) Applicant: Volvo Car Corporation, 405 31 Göteborg (SE)
(72) Inventor: HJERPE, Erik, 40531 Göteborg (SE); BJÖRKLUND, Tomas, 40531 Göteborg (SE); SJÖGREN, Anders, 40531 Göteborg (SE); KOPPISETTY, Ashok Chaitanya, 40531 Göteborg (SE); BRASK, Oscar, 40531 Göteborg (SE); HELLQVIST, Oskar, 40531 Göteborg (SE)
(74) Representative: Maiwald GmbH

(57) **Abstract**

The disclosure relates to a computer-implemented method (100) for controlling a system (20) of a vehicle (1), the method (100) comprising:
- obtaining a first signal (S1) at a first time (t1), the first signal (S1) being indicative of a first specification relating to a user (2) of the vehicle (1), the first specification being at least one from a user characteristic, a user position, a user movement, and a user interaction with the vehicle (1),
- obtaining a second signal (S2) at a second time (t2) later than the first time (t1), the second signal (S2) being indicative of a second specification relating to the user (2) of the vehicle (1), the second specification being at least one from a user characteristic, a user position, a user movement, and a user interaction with the vehicle (1), the second specification being different from the first specification, and
- providing an instruction (INS) for controlling the system (20) of the vehicle (1) based on the first specification, the second specification, the first time (t1), and the second time (t2).

## Description

### TECHNICAL FIELD

The present disclosure relates to a computer-implemented method for controlling a system of a vehicle, a computer program product, a data processing apparatus, and a vehicle.

### BACKGROUND ART

Control of user centric vehicle systems, such as for example adjusting vehicle seat settings, setting the climate control system, and controlling other user preference, or user specific, systems, are today mainly initiated manually. For some systems of a vehicle, different levels of user assistance or automation may be used. Automated systems generally use input from sensors for determining how the system should be controlled. The sensor input used is generally momentary, or only reflects changes in sensor data within a relatively short time perspective. The systems do not consider if a specific indicated control of a system has high or low probability of being correct, or is reasonable taking historical events in consideration, given the current situation.

### SUMMARY

The problem is at least partially solved or alleviated by the subject matter of the independent claims of the present disclosure, wherein further examples are disclosed in the dependent claims.

According to a first aspect, there is provided a computer-implemented method for controlling a system of a vehicle, the method comprising:
- obtaining a first signal at a first time, the first signal being indicative of a first specification relating to a user of the vehicle, the first specification being at least one from a user characteristic, a user position, a user movement, and a user interaction with the vehicle,
- obtaining a second signal at a second time later than the first time, the second signal being indicative of a second specification relating to the user of the vehicle, the second specification being at least one from a user characteristic, a user position, a user movement, and a user interaction with the vehicle, the second specification being different from the first specification, and
- providing an instruction for controlling the system of the vehicle based on the first specification, the second specification, the first time, and the second time.

The invention is based on the finding that today's vehicles lack short and long-term memory regarding different specifications relating to the user of the vehicle. For example, if the second time of a second specification (e.g., a user position of an identified or known user in the vehicle) is from a current usage event (e.g., a current journey or travelling time with the vehicle), and the first time of the first specification (e.g., a different user position of the same user in the vehicle) is from a previous usage event (e.g., a previous journey or travelling time with the vehicle), in today's vehicles the first specification let alone the first time is not taken into account to control a system of the vehicle (e.g., an automatic seat adjustment system for adjusting the seat automatically according to stored preferences of the user within the vehicle) when using the second specification and the second time for this purpose. However, a provided, in particular generated, instruction for controlling the system may benefit from considering the first specification and first time or any other previous specification and previous time. For example, in the illustrative example of automatic seat adjustment, considering previous specifications and times, it may be found that the identified or known user has reseated themselves to a different seat than previously used. Potentially the stored preferences do not apply to that seat anymore, e.g., if changed from the driver seat to the co-pilot seat. Hence, for example, instead of providing a control instruction to the automatic seat adjustment system for automatically adjusting the seat, the instruction may be to control a different system and/or the automatic seat adjustment system in a different way, e.g., ask the user via an infotainment or any user interface system to adjust the seat manually for storing new preferences for that seat or whether the preferences from the other seat shall be applied.

Accordingly, by considering previous specifications and time of respective specification, it is possible to greatly enhance the control precision and accuracy of control of different systems in a vehicle, specifically systems centered around the user of the vehicle. Thereby, many otherwise erroneous control operations or proposals for control to a user of the vehicle may be avoided.

When herein referring to time, e.g., first time and second time, generally a point or moment in time is meant. Hence, time and point or moment in time may be interchangeably used herein. When herein referring to time interval, generally an interval between points or moments in time is meant. In other words, a time interval refers to a duration of time and may be interchangeably used herein.

Specifically, the method allows the vehicle to consider and use information and potentially patterns found in user centric data, herein referred to as specifications, from multiple devices such as sensors, from which the signals may be obtained, from previous points in time, e.g., in earlier drive cycles, to be used for a current point in time. By basing decisions relating to control of a vehicle system, not only on current device data (e.g., sensor signals), but also on information from a previous point in time, the performance, accuracy and relevance of decisions taken when initiating control of a user centric functions can be improved. This allows to add information (e.g., including probabilities) to the decision processes for controlling systems, enabling enhanced decision precision and/or allows to employ fewer and/or less expensive sensors in the vehicle to arrive at the same probability to provide a control instruction for a system.

According to examples, the method of the first aspect is a computer implemented method. This means that at least one, multiple or all parts or steps of the method may be carried out by one or more computers or computing units. Different parts or steps of the method may be carried out by the same or by different computers. A computer is herein understood as a data processing apparatus, or a programmable device that is configured to store, receive and process data, and which can carry out the parts or steps as defined by the method. The data processing apparatus may for example be a central computer of the vehicle, also referred to as core computer, or be part of one or more control units of the vehicle, e.g., for controlling the system.

Generally, the user may be any occupant or passenger of the vehicle, including the driver, co-pilot, or any other passenger. Further, the vehicle may be any type of vehicle, for example a passenger car, a truck, or similar.

Generally, the system may be any system of a vehicle that is configured to operate or control one or more units of the vehicle. As exemplary described herein, the system may be an automatic seat adjustment system, which may be configured to control the automatic adjustment of one or more seats inside the vehicle based on user preferences, which may be associated with specific users and stored in a database or provided as user input on a user interface for adjusting a seat. However, the system may alternatively be any other system of the vehicle, which may make use of the signals indicating the user characteristic, the user position, the user movement, or the user interaction. For example, the system, or any additional system may be a vehicle access control system for accessing the vehicle, a climate control system for controlling the climate inside the vehicle cabin, an entertainment and/or infotainment system for entertainment and/or information of a user inside the vehicle (e.g., including sound settings for music, video or information played through vehicle speaker, information to be displayed, entertainment to be provided on one or more displays of the vehicle, etc.), a driver setting control system for adapting driver settings (e.g., steering wheel position, seating position, activation and deactivation of driving functions, such as autonomous driving functions, e.g., lane keep assist, cruise control, and similar), and similar.

Specifically, the system, and the settings of the system, may be associated to one or more users of the vehicle, e.g., for providing one or more user comfort functions, such as automatic seat adjustment based on user preferences. In such example, the system may be alternatively referred to as a user centric system or user comfort system. A user centric or comfort system may provide one or more user functions to a user inside the vehicle, which may be particularly relating to their comfort. For example, based on a user characteristic as indicated by a specification, a user may be identified and based on that, one or more preferences associated with that user, as may be stored in a database of the vehicle, may be used for the instruction for controlling the specific system, e.g., a stored seat adjustment preference of the identified user. Also, or alternatively, for example, the user may be seated at different user positions and there may be different seat adjustment preferences for different seats for the identified user. Alternatively, the user position may indicate whether the user is outside of the vehicle or inside of the vehicle. For example, when the user is outside of the vehicle, this specification may be used for a vehicle access control system. Moreover, when the user is moving or interacts with the vehicle, e.g., moving towards the vehicle or interacting with a door handle, this may as well be used for the vehicle access control system and/or another system, e.g., for the automatic seat adjustment system to automatically adjust the seat for the user before they are seated in the seat expected based on their position, movement and/or interaction. Hence, comfort is herein to be understood broadly in that it supports the user in the usage of the vehicle, e.g., when seated, when driving or operating any system. For example, the comfort may be enhanced by automatically controlling one or more systems based on the specifications and their times such that, at least with a high probability, the user's preferences are met. Similarly, a system is herein to be understood broadly in that it may be any system, in particular user centric or comfort system, of a vehicle benefitting from considering one or more of the user characteristics, user position, user movement and user interaction for controlling one or more units.

For example, a user characteristic may be relating to the physical appearance, e.g., face, eyes, fingerprint, gait cycle, or similar of the user. To determine the user characteristic, e.g., a camera, a fingerprint sensor, and similar may be used to generate a signal being indicative thereof. The user position may be relating to the user position outside of the vehicle, in particular relative to the vehicle, or inside the vehicle. To determine the user position, for example, a camera, any device or unit being handled, touched or actuated by the user, a weight sensor of a seat, and any other sensor may be used to generate a signal being indicative of a user's position. The user movement may be relating to the user movement outside or inside of the vehicle. For example, the user movement may be the gait cycle of the user as may be recorded by a camera and provided as signal indicative thereof. The user interaction may be any interaction of the user with a device or unit of the vehicle, which may be sensed by a sensor thereof or otherwhere, e.g., a camera.

The method may further comprise executing the instruction for controlling the system. The execution may be carried out by the data processing apparatus as described herein, which may be a central computer or a control unit, for example of the system being controlled. Executing the instruction may comprise the data processing apparatus instructing, hence, signaling instructions to, a system of the vehicle acting, or being operated, in accordance with the provided instruction. According to embodiments, the data processing apparatus is configured to perform the operation of causing an instruction for controlling the system to be executed.

According to an example, the first signal may be a stored signal used for controlling a second system of the vehicle. The second system may be different from the other system, which may be herein referred to also as a first system. The second system may have used information provided in the first signal for controlling the second system, may use the information provided in the first signal for controlling the second system at the first time, hence, at the same time as the (first) system obtains the first signal, or may use the information for controlling the second system at a time later than the first time. It is noted that the systems and other entities or features are referred to herein as first, second and so merely for the purpose of distinguishing them among each other and are not intended to limit these in any way. In effect, the first signal is thereby used twice, once for the (first) system and once for the second system. Specifically, after its first use for the second system, it may be reused for the control of the (first) system. Hence, the first signal may be a reused signal, which may have been stored specifically for the purpose of later usage as opposed to a signal used for a single time which is not stored, at least not for further use for controlling another system. Contrary to this, typically, signals in today's vehicles are often only used once or at least are not stored for later usage for controlling another system. By reusing such signals, knowledge of a specification relating to the user, used by one system at the first point in time, may be stored and reused to increase accuracy and the probability of making a correct decision, by another system and at a second point in time, without requiring other or additional sensor data. For example, the first signal may be generated when unlocking a locked vehicle door of a vehicle access control system of the vehicle, e.g., based on a user action of the user pulling a handle. Later, for providing the instruction for controlling another system, e.g., an automated seat adjustment system, the first signal may be reused and used together with the then obtained second signal. Based on the first signal, the knowledge of the specification (e.g., that the user actuated the handle of the vehicle door) was thereby transferred to the time of providing the instruction for controlling the automated seat adjustment system. Thus, the probability that the user is or will be sitting on that seat is increased. This makes an automatic adjustment of the seat more probable to be useful than not, e.g., because the user may not be sitting on that seat. In this example, the second signal could be indicative of a user interaction in form of inserting a seat belt into its connector, further increasing the probability. Moreover, there could be a third signal, fourth signal, etc. as described hereinafter. Additionally, the method may optionally include storing the first signal, in particular in a database of the vehicle, e.g., of the data processing apparatus.

According to an example, the first signal may be indicative of the first interaction of the user with a first unit of the vehicle, and the second signal may be indicative of the second interaction of the user with a second unit of the vehicle. Alternatively, the first unit and the second unit may be the same. The first unit and the second unit may be both from the same system or from different systems, i.e., the first unit may be from a different system than the second unit, wherein the systems may be configured as exemplary described here, e.g., automatic seat adjustment system, vehicle access control system, and so on. The first unit and/or the second unit may be from the same system as the one for which the instruction is provided to control the system and/or the system for which the first signal is being used, or the first unit and/or the second unit may be from different systems. For example, the first unit and/or the second unit may be from a door handle, a key fob or smartphone in wireless communication with the vehicle, a camera for observing the surrounding of the vehicle, and similar, for example as of the example of a vehicle access control system for accessing the vehicle. As another example, additionally or alternatively, the first unit and/or the second unit may be a climate control device (e.g., one or more buttons, touch display interfaces or any other interface for receiving user input for controlling the climate inside the vehicle cabin), an air vent, an air vent regulator, and similar, for example as of the example of a climate control system for controlling the climate inside the vehicle cabin. As an additional or alternative example, the first unit and/or the second unit may be from an entertainment or infotainment unit (e.g., a touch display, a speaker, or similar), an entertainment or infotainment interface for receiving user input for controlling the entertainment or infotainment unit, and similar, for example as of the example of an entertainment and/or infotainment system for entertainment and/or information of users inside the vehicle. Also, or alternatively, the first unit and/or the second unit may be from any device electronically adjustable in its position, e.g., a seat, a steering wheel, and similar, as well as any device relating to the control of the vehicle driving or other vehicle functions, such as a lever or any interface device for cruise control or other functions, in particular in the case of a driver setting control system and/or an automatic seat adjustment system.

According to an example, the first signal may be provided from, in particular obtained from, a first sensor of the vehicle, and the second signal may be provided from, in particular obtained from, a second sensor of the vehicle. Alternatively, the first signal and the second signal may be provided from the same sensor. The first sensor and the second sensor may be associated to the same system or to different systems, of the vehicle. As previously mentioned, the systems may for example be one of an automatic seat adjustment system, a vehicle access control system, and so on. Also, the sensors may be used across different systems or in a general manner on a vehicle level, e.g., an interior and/or exterior vehicle camera or camera sensor of the vehicle. Hence, the method may advantageously consider signals from different sensors at different times, wherein the sensors may be from the same or different systems of the vehicle. Thereby, when tracking the specification relating to the user of the vehicle over time, the user characteristics, user positions, user movements and/or user interactions may be established using different sensors over time, increasing the probability with which a certain situation relating to the user may be predicted or assumed, e.g., where the user is located, what action the user is about to take, and similar, for providing an instruction for controlling a system such that it accurately reflects the current situation of the user. Also, by using different sensors, the understanding the data processing apparatus has about a current situation of the user, as specified by the specifications, may be more accurate because that understanding may be confirmed by combining information from different sensors, rather than relying on a single sensor only, or only relying on sensors from the system to be controlled.

According to an example, the first sensor and the second sensor may be from different sensor types. The sensors being from different types means that they may be using different sensor technology and/or be configured to be used for measurement or sensing of different parameters. Non-limiting examples of different sensor types in vehicles are actuators, user interfaces or sensors thereof, which may register an actuation by a user (e.g., any handle, lever, button, touch display), cameras or camera sensors, proximity sensors, weight sensors, and so on. These different sensor types may use different sensor technology, such as but not limited to, rotary sensors (e.g., of steering wheel as unit of the vehicle), accelerometers (e.g., of gas pedal as unit of the vehicle), closed circuit sensor (e.g., of seat belt connector as unit of the vehicle), position sensors, capacitive sensors, current sensors, touch sensors, pressure sensors, motion sensors, image sensors, infrared sensors, temperature sensors, and so on. Using different types of sensors also allows to increase the accuracy with which a certain situation relating to a user based on the specifications may be established for correspondingly controlling one or more systems.

According to an example, the first sensor and the second sensor may be from different units of the vehicle. In particular, the first sensor may be from the first unit and the second sensor may be from the second unit as described herein. Hence, when the user interacts with the first unit, the first sensor provides the first signal, and when the user interacts with the second unit, the second sensor provides for the second signal. However, according to examples described herein, alternatively, one or more of the sensors may also be from a different unit of the vehicle than the units with which the user interacts. For example, when the user interacts with a door handle, instead of using a sensor of, inside or electronically connected to, the door handle as unit of the vehicle, an exterior camera may be used to provide a signal indicative of the user interaction with the door handle based on an image taken by the exterior camera. Thereby, it may be possible to sense user interactions with units of the vehicle, which do not have sensors or are not electronically connected to a sensor. Also, such sensors may be used in addition for confirming a certain situation, e.g., for confirming that a door handle was in fact actuated by the user.

According to an example, the instruction may be further based on a time interval between the first time and the second time. This allows to not only consider the interaction itself, e.g., qualitative (e.g., does the user actuate the steering wheel as unit of the vehicle), or quantitative (e.g., in which direction and by how much is the user steering), which unit the user interacts with, etc., at consecutive times, but also that the time or time interval between the interactions is being considered. This means that the instruction specifically considers or reflects the time interval, or, in other words, time passed between the first time and the second time. For example, in case a long time has passed between the first time and the second time, for some systems, the accuracy of the first specification may have less accuracy compared to a case where only a short time has passed between the first time and the second time. Hence, for example, there may be one or more time interval thresholds, which may be compared to the time interval between the first time and the second time. Each one of these one or more time interval thresholds may be specific for the system to be controlled and/or the type of specification, e.g., user characteristic, user position, user movement or user interaction. For example, the user characteristic may be less time dependent then the user position. Further, in case of one time interval threshold, this time interval threshold may be configured such that when the time interval threshold is met by the time interval, the signal with that time interval may be considered for providing the instruction. Alternatively it may not be considered for providing the instruction. In case of two or more time interval thresholds, these may be assigned with a different probability or accuracy. For example, after a certain passed time or duration based on a further time interval threshold, the signal or specification thereof may still be considered for providing the instruction. However, it may be given less weight for providing the instruction for controlling the system. For example, in case of automatic seat adjustment of a driver seat, if the signals identifying a certain user associated with stored seat adjustment are obtained with a significant time interval between their points of times, then the control instruction to adjust the seat based on their preference may be only partially executed. E.g., only partially may in this example mean more foot room. Contrary to this, the control instruction may be fully executed when the signals are received quickly after one another, e.g., from an exterior camera sensor specifying the movement of the user, by which the user may be identified in terms of their gait cycle, and a door handle being actuated or a key fob being used.

According to an example, the providing of the instruction may be comprising:
- obtaining one, from at least two, stored data sets relating to different users based on the first signal and the second signal, the obtained data set being indicative of at least one setting of the system,
the instruction comprising the at least one setting of the system in the instruction.

According to this example, it may be considered that different users may be using the vehicle and that the vehicle has stored data sets, each one relating to these different users. In particular, these stored data sets may be relating to preferences or comfort settings of the different users based on their previous usage or manual settings of one or more systems. For example, the users may have once, or multiple times, adjusted their seat and the settings of the latest or most used adjustments may have been stored. When identifying the user in terms of their user characteristic, e.g., face, fingerprint, or similar, and/or user movement, e.g., gait cycle, or similar, such stored data set may be retrieved for controlling one or more systems of the vehicle, e.g., the automatic seat adjustment system. Advantageously, one of the two or more data sets, may be obtained or retrieved based on the first signal and the second signal. By taking the two signals in consideration, and optionally the point in time of respective first and second signal and/or the period of time between the first and second signals were obtained, the probability of obtaining the correct stored data set, and subsequently controlling one or more vehicle systems as desired by the vehicle user associated to the obtained stored data set, can be improved. Further, the method may comprise setting the system as indicated in the obtained data set based on the obtained instruction.

According to an example, at least one of the first and second specification may be generated by using an Artificial Intelligence (AI) / Machine Learning (ML) process for determining the first specification and/or the second specification. Alternatively, or additionally, the method may be further comprising:
- obtaining at least one Artificial Intelligence (AI) / Machine Learning (ML) generated specification relating to the user of the vehicle, the AI generated specification being at least one from a user characteristic, a user position, a user movement, and a user interaction with the vehicle, based on at least one of the first specification, the second specification, the first time, and the second time,
the instruction being further based on the at least one AI generated specification. In any case, independent of whether the AI / ML generated specification is from one of the first or second specification or any additional specification, this provides the method with a possibility to generate more specifications, where real world data, e.g., sensor data is not available or of some other reason, for example due to low accuracy, not sufficient. For example, there may be cases, where it would be desirable to have some additional signal to confirm a certain user situation, but such signal may not be available. For example, the face of a vehicle user, as an exemplary user characteristic, may be covered by an object from an interior vehicle camera , or, the interior vehicle camera may be arranged in a way so that the vehicle user is not recognizable. In this case, an AI / ML process may be used to generate a specification, which may aid in identifying the user nevertheless. In this case, input from, for example, sensors, not sufficient for recognizing the vehicle user alone, can be augmented with additional inputs. The user may for example be recognized by means of an AI / ML process, e.g., based on a learned behavior of that specific user, e.g., that the user is typically hidden by the same object often, e.g., because he wears a hat or sits in a certain position inside the vehicle, or similar. Also, such AI / ML generated specification may be based on previous, e.g., first and/or second specifications or signals. For example, an image of a previous signal may be reused for the AI / ML generation of a further specification. Thereby, using AI / ML processes may be used to aid in providing further specifications, which would otherwise not be available, to provide an even higher accuracy for the provision of the instruction for controlling the system. AI / ML models used for the AI / ML processes may be either pre-trained, using previously collected characteristics of identified vehicle users, or trained continuously as the vehicle is used, and characteristics continuously are collected.

According to an example, the method may be further comprising:
- obtaining a third signal at a third time later than the first time and the second time, the third signal being indicative of a third specification relating to a user of the vehicle, the third specification being at least one from a user characteristic, a user position, a user movement, and a user interaction with the vehicle,
the instruction being further based on the third signal. Also, there may be more than a third signal, e.g., a fourth signal, a fifth signal, and so on. By having more signals indicative of specifications relating to the user of the vehicle, the accuracy of the control of the system provided by the instruction may be increased. In case of three or more signals, also the second signal may be a stored signal, which may be or have been used for controlling the second system or a third system of the vehicle, wherein the second system or third system may be controlled at the second time or a time later than the second time. The third signal may be from the first sensor, second sensor or a third sensor of the vehicle, wherein the third sensor may be of a different sensor type than the first sensor and/or the second sensor. Also, the third sensor may be from a different unit of the vehicle than the first sensor and/or the second sensor. Moreover, the instruction may be further based on a time interval between the first time and the third time and/or a time interval between the second time and the third time. Also, the third signal may be used for obtaining one of the data sets.

According to an example, the first signal may be a stored signal from a previous usage event of the vehicle, and the second signal and third signal may be from an ongoing usage event of the vehicle. For example, the previous usage event may be a current journey or drive with the vehicle and the ongoing or current usage event may be a current or ongoing journey or drive with the vehicle. The different usage events may be separated from one another by non-usage of the vehicle, e.g., standstill, no driver inside the vehicle, for a certain period of time or duration, e.g., a number of hours, or similar. The first signal may have been used during the previous usage event of the vehicle. Thereby, previously stored and in particular used signals reflecting previous usage events may be considered in ongoing usage events of the vehicle, aiding in increasing the accuracy with which a control of a system may be carried out to reflect a current situation relating to the user of the vehicle.

According to an example, the first time and the second time may be from different usage events of the vehicle. The different usage events may be from at least two of: an approaching the vehicle event, an entering the vehicle event, a starting the vehicle event, a driving event, a parking event, a turning off the vehicle event and a leaving the vehicle event. Any one of the aforementioned examples of usage events may also, or alternatively, be used for the above-described previous usage event and/or ongoing usage event. An approaching the vehicle event may be defined by one or more users approaching the vehicle, in particular for entering the vehicle. An entering the vehicle event may be defined by one or more users entering the vehicle, e.g., by unlocking it, opening one or more of its doors and/or entering the vehicle cabin. A starting the vehicle event may be defined by starting a system of the vehicle, e.g., a central computer and/or an engine thereof for subsequently driving the vehicle. A driving event may be defined by a driving operation of the vehicle. A parking event may be defined by the vehicle being in a parked state without moving the vehicle. A turning off the vehicle event may be defined by shutting down a system of the vehicle, e.g., a central computer and/or an engine thereof. A leaving the vehicle event may be defined by a user locking the vehicle, closing one or more of its doors and/or exiting the vehicle cabin. Accordingly, the first, second, third, fourth etc. specifications, respective first, second, third, fourth etc. points in time, and/or periods of time between relevant combination of points in time, from different usage events may be considered for increased accuracy to reflect the current user situation in a current usage event. In other words, even though the points in time of the signals are from different usage events, they may still be considered to increase the accuracy with which the instruction reflects the current user situation.

According to a second aspect, there is provided a computer program product comprising instructions which, when executed by a data processing apparatus cause the data processing apparatus to carry out the method of the first aspect. The computer program product may be the computer program (as such) or a product containing the computer program, e.g., a computer readable storage medium, which may be part of the data processing apparatus. The data processing apparatus may be comprising a processing unit, such as a CPU, for executing the instructions.

According to a third aspect, there is provided a data processing apparatus comprising means for carrying out the method of the first aspect. Such means may be the computer program product as specified herein, for example.

According to a fourth aspect, there is provided a vehicle comprising the data processing apparatus of the third aspect.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
Figure 1 shows a schematic illustration of a computer-implemented method for controlling a system of a vehicle,
Figure 2 shows a schematic illustration of the vehicle, and
Figure 3 shows a schematic illustration of an example of the method being carried out by a data processing apparatus of the vehicle.

### DETAILED DESCRIPTION

The Figures are merely schematic representations and serve only to illustrate examples of the disclosure. Identical or equivalent elements are in principle provided with the same reference signs.

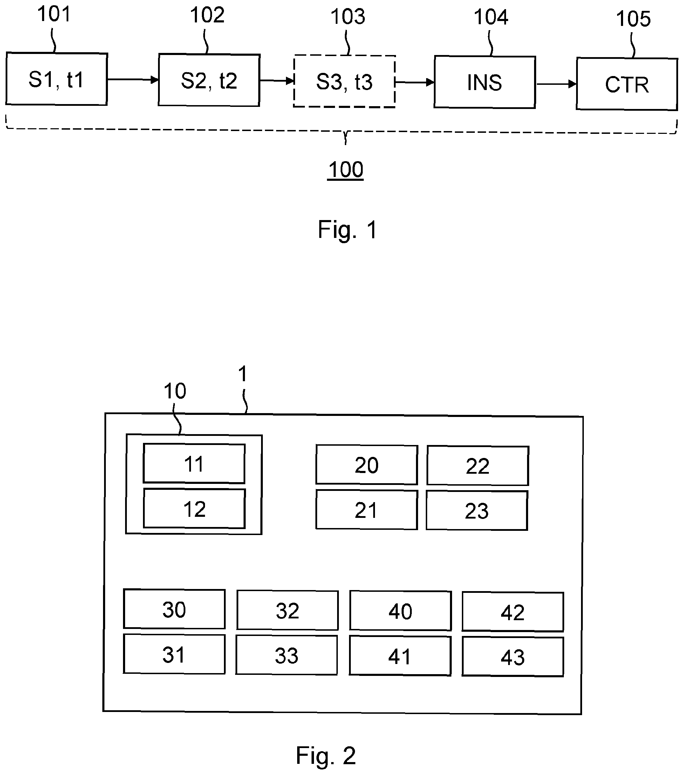

Fig. 1 shows a schematic illustration of a computer-implemented method 100 to be carried out by a data processing apparatus 10, in particular a processing unit 11 of the data processing apparatus 10, of a vehicle 1 as schematically illustrated in Fig. 2. As shown in Fig. 2, the data processing apparatus 10 may further comprise a computer program product 12, which may be a computer-readable storage medium, for example. The computer program product 12 may comprise instructions which, when executed by the processing unit 11, e.g., a CPU of a computer as data processing apparatus 10 (e.g., a central computer or core computer of the vehicle 1), carries out the method 100.

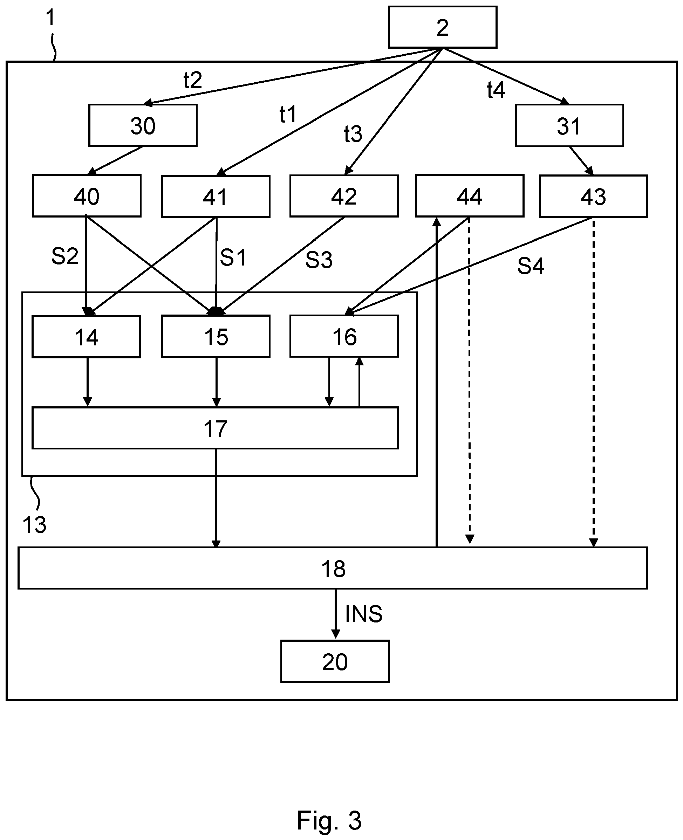

In a first step 101 of method 100, the data processing apparatus 10 obtains a first signal S1 at a first time 11. The first signal S1 is indicative of a first specification relating to a user 2 (see Fig. 3) of the vehicle 1, the first specification being at least one from a user characteristic, a user position, a user movement, and a user interaction with the vehicle 1.

In a second step 102 of method 100, the data processing apparatus 10 obtains a second signal S2 at a second time t2. The second signal S2 is indicative of a second specification relating to the user 2 of the vehicle 1, the second specification being also at least one from a user characteristic, a user position, a user movement, and a user interaction with the vehicle 1. The second signal S2 may be from the same type of the list of a user characteristic, user position, user movement and user interaction with the vehicle or from a different type of that list compared to the first signal S1.

Optionally, in a third step 103 of method 100, the data processing apparatus 10 may obtain yet another signal, namely a third signal S3 at a third time t3. The third signal S3 is indicative of a third specification relating to the user 2 of the vehicle 1, the third specification being also at least one from a user characteristic, a user position, a user movement, and a user interaction with the vehicle 1. Also, the method 100 may optionally obtain in further, not illustrated steps any number of further signals, such as a fourth signal S4, and so on at a fourth time t4 and so on, as shown in Fig. 3.

Generally, the method 100 is intended or configured for controlling one or more systems 20, 21, 22, 23 of the vehicle 1 as schematically shown in Fig. 2. For this purpose, the method 100 comprises in a fourth step 104 that the data processing apparatus 10 provides an instruction INS for controlling one or more of the systems 20, 21, 22, 23 of the vehicle 1 based on the first specification, the second specification, the first time t1, and the second time t2, and optionally based on any further specification and time, such as the third specification and third time t3.

Then, in a fifth step 105 of method 100, the data processing apparatus 10 and/or the respective system 20, 21, 22, 23 to be controlled may execute the instruction INS and/or a control instruction CTR based thereon, as indicated in Fig. 1. For example, the data processing apparatus 10 may provide an instruction INS that may be directly executable by the respective system 20, 21, 22, 23 or, alternatively, the instruction INS may be processed, e.g., converted to a control instruction CTR executable by the respective system 20, 21, 22, 23.

As shown in Fig. 2, the vehicle 1 moreover comprises several units 30, 31, 32, 33, namely a first unit 30, a second unit 31, a third unit 32, and a fourth unit 33. Moreover, the vehicle 1 comprises a first sensor 40, a second sensor 41, a third sensor 42, and a fourth sensor 43. It is noted that the number of units, sensors and systems showed in the figures are merely exemplary and not intended to be limiting. The number of any one of the units, sensors and systems may be less or more than four. Any one of the units and any one of the sensors may be from one of the systems 20, 21, 22, 23. Generally, the signals S1, S2, S3 may be obtained by the data processing apparatus 10 from one or more of the sensors 40, 41, 42, 43, in particular from different sensors 40, 41, 42, 43, which may be from different systems 40, 41, 42, 43, from different units 30, 31, 32, 33 and/or of different sensor types, for example. This means that the sensors 40, 41, 42, 43 may be generating the signals S1, S2, S3 and these may be sensor signals. However, the signals S1, S2, S3 may be processed at any stage, i.e., before obtaining them at the data processing apparatus 10 or after obtaining them, including before using them to provide, in particular determine, the instruction INS.

In an example, the first signal S1 may have been previously used, e.g., during a previous usage event of the vehicle 1, and the second signal S2 and/or the third signal S3 may be from an ongoing usage event. For considering the first signal S1 for the control of one or more of the systems 20, 21, 22, 23 during the current or ongoing usage event, the first signal S1 may have been stored in a database, e.g., of the computer program product 12, before, during and/or after use of the first signal S1 during the usage event of the vehicle 1.

Fig. 3 shows a schematic illustration of an exemplary user situation, in which the method 100 is being used to control a system 20. It is noted that this example is only for illustrative purposes.

In the example of Fig. 3, the user 2, at the first time t1, approaches the vehicle 1. In this case, the second sensor 41 is configured as an exterior vehicle camera. Hence, the second sensor 41 may generate a first signal S1, e.g., in the form of images and/or video of the user 2. The first signal S1 may be provided by the second sensor 41 to the data processing apparatus 10, where it may thereby be obtained. In this example, the first signal S1 is indicative of a first specification relating to the user 2 of the vehicle 1 in the form of a user movement and user position. From this, the data processing apparatus 10 may deduct that the user 2 may be approaching to enter the vehicle 1. For example, the data processing apparatus 10 may analyze the gait cycle of the user 2 based on the first signal S1 and compare it to stored gait cycles of known users 2 of the vehicle 1. If there is a sufficient match between the gait cycle of the user 2 approaching the vehicle 1 and any one of the stored gait cycles, the data processing apparatus 10 may deduct that a user 2 of the vehicle 1 is approaching the vehicle 1 to unlock it. However, the probability may be low because the user 2 may be just a person passing the vehicle 1, for example.

Then, at a second time t2, the user 2 may be using a digital key, key fob or any other user device such as a smartphone to transmit an unlocking signal to an antenna as a first unit 30 of the vehicle 1 to unlock the vehicle 1. The antenna may be configured to unlock the vehicle 1 upon receiving the unlocking signal. The antenna or any sensors thereof or associated therewith, i.e., connected thereto such that it may sense or register that the unlocking signal was received by the antenna, may generate a second signal S2. In this example, the first sensor 40 generates the second signal S2 and provides it to the data processing apparatus 10, obtained thereby. In Fig. 3, the data processing apparatus 10 is not shown itself. Instead, the computer program 13 or instructions of the computer program product 12 are schematically illustrated, e.g., in the form of an intelligent vehicle user model to be executed by the processing unit 11. In this example, the second signal S2 is indicative of a second specification relating to the user 2 of the vehicle 1 in the form of a user interaction with the vehicle 1, namely an unlocking interaction based on the user's 2 interaction with their key fob or similar. Based on signals S1 and S2, an instruction INS may be provided, in particular determined. Determining appropriate instruction INS based on two signals, S1 and S2, enables the instruction to be more accurately determined than if just signal S1 would be considered.

In this example, both the first signal S1 and the second signal S2, may be provided to a user tracker element 14 of the computer program 13, which may be a part of a program code and/or a functionality of the computer program 13. The user tracker element 14 may be configured to track where the user 2 or each user 2, if multiple users 2 are present, of the vehicle 1 is without identifying them. This information may subsequently be stored in a shortterm memory. The user(s) may first be tracked by frame-to-frame recognition in external video data and/or by moving between views of different cameras, and subsequently door switch signals, and recognition by interior cameras, and/or seat occupation sensors, can be relied on to determine which seat they are sitting in. This allows to determine whether consecutive (or almost consecutive) measurements are of the same user 2 and should be considered to be related signals.

Also, in this example, both, the first signal S1 and the second signal S2, are provided to a user recognizer element 15 of the computer program 13, which may be a part of a program code and/or a functionality of the computer program 13. The user recognizer element 15 may be configured to recognize the user 2 or users 2 from previous usage events, e.g., journeys of the same vehicle 1, or even from journeys of other vehicles, through external and interior cameras and/or digital key/phone, for example. This allows to connect previous measurements and information from sensors 40, 41 or user profiles that would otherwise not be available yet, for example because the user is still approaching the vehicle while the sensor 42 requires the user 2 to be seated already.

Subsequently, at a third time t3, the user 2 may be entering the vehicle 1 and be recorded by an interior vehicle camera as sensor 42, for example, which may generate a third signal S3, e.g., in the form of images and/or video of the user 2. The third signal S3 may be provided by the third sensor 43 to the data processing apparatus 10, where it may thereby be obtained. In this example, the third signal S3 is indicative of a third specification relating to the user 2 of the vehicle 1 in the form of a user characteristic, e.g., their face. From this, the data processing apparatus 10 may recognize the user 2 as one of multiple known or stored users 2, e.g., the face of each one being stored in a database. For this purpose, as shown in Fig. 3, the signal S3 is provided to the user recognizer element 15.

Then, at a fourth time t4e a further signal S4 may be provided by yet another sensor 43. In this example, the sensor 43 may be a weight sensor inside a seat as unit 31 of the vehicle 1. Once the user 2 sits in the seat, the sensor 43 may generate the signal S4 indicating a user characteristic in form of the user's weight. This may be provided to the user recognizer 15 and/or, as shown in Fig. 3, to a user information updater element 16, which may be a part of a program code and/or a functionality of the computer program 13. The user information updater element 16 may be configured to consider information of a recognized or tracked user, in combination with the available old information from a user centric database and update it based on all the available information and potentially determined accuracy estimations. For clarification, yet further signals, recorded at yet subsequent points in time, may also considered. Also, there may be an AI / ML sensor 44, configured to perform an AI / ML process, as shown in Fig. 3, which may be configured to generate a further specification relating to the user as described herein and submit it to the user information updater element 16 and/or an information processing layer 18 as shown, from which it may also receive feedback for training of the AI / ML sensor 44.

The computer program 13 may further comprise a user centric database 17, for example, with which the several elements 14, 15 and 16 may interact for storing the specifications, signals S 1 to S4, times t1 to t4 and/or any information gathered from the elements 14, 15, 16 by processing the aforementioned information therein. The user centric database 17 may provide all this to an information processing layer element 18, which may be separate from the computer program 13 or part thereof, and which may, based thereon, determine the instruction INS for the system 20. Given that four (or more) signals, S 1 to S4, from different points in time, t1 to t4, and different sensors 40, 41, 42, 43 have been considered, the accuracy for the corresponding control of the system 20 is very high, for example leading to that the seat is adjusted as required for the user 2 sitting in that seat.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

In the context of the present disclosure any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope of the claims.

### LIST OF REFERENCE SIGNS

- 1: vehicle
- 2: user
- 10: data processing apparatus
- 11: processing unit
- 12: computer program product
- 13: computer program
- 14: user tracker element
- 15: user recognizer element
- 16: user information updater element
- 17: user centric database
- 18: information processing layer element
- 20, 21, 22, 23: systems
- 30, 31, 32, 33: units
- 40, 41, 42, 43: sensors
- 100: method
- 101 - 105: steps
- S1, S2, S3, S4: signals
- t1, t2, t3, t4: points in time
- INS: instruction
- CTR: control instruction

## Claims

1. A computer-implemented method (100) for controlling a system (20) of a vehicle (1), the method (100) comprising:
- obtaining a first signal (S1) at a first time (11), the first signal (S1) being indicative of a first specification relating to a user (2) of the vehicle (1), the first specification being at least one from a user characteristic, a user position, a user movement, and a user interaction with the vehicle (1),
- obtaining a second signal (S2) at a second time (t2) later than the first time (11), the second signal (S2) being indicative of a second specification relating to the user (2) of the vehicle (1), the second specification being at least one from a user characteristic, a user position, a user movement, and a user interaction with the vehicle (1), the second specification being different from the first specification, and
- providing an instruction (INS) for controlling the system (20) of the vehicle (1) based on the first specification, the second specification, the first time (11), and the second time (t2).

2. The method (100) of claim 1, the first signal (S1) being a stored signal used for controlling a second system (21) of the vehicle (1).

3. The method (100) of claim 1 or 2, the first signal (S1) being indicative of the first interaction of the user (2) with a first unit (30) of the vehicle (1), and the second signal (S2) being indicative of the second interaction of the user (2) with a second unit (31) of the vehicle (1).

4. The method (100) of any one of the previous claims, the first signal (S1) being from a first sensor (40) of the vehicle (1), and the second signal (S2) being from a second sensor (41) of the vehicle (1).

5. The method (100) of claim 4, the first sensor (40) and the second sensor (41) being from different sensor types.

6. The method (100) of claim 4 or 5, the first sensor (40) and the second sensor (41) being from different units (30, 31, 32, 33) of the vehicle (1).

7. The method (100) of any one of the previous claims, the instruction (INS) being further based on a time interval between the first time (11) and the second time (t2).

8. The method (100) of any one of the previous claims, the providing of the instruction (INS) comprising:
- obtaining one, from at least two, stored data sets relating to different users (2) based on the first signal (S 1) and the second signal (S2), the obtained data set being indicative of at least one setting of the system (20),
the instruction (INS) comprising the at least one setting of the system (20).

9. The method (100) of any one of the previous claims, the method (100) further comprising:
- obtaining at least one Artificial Intelligence (AI) / Machine Learning (ML) generated specification relating to the user (2) of the vehicle (1), the AI generated specification being at least one from a user characteristic, a user position, a user movement, and a user interaction with the vehicle (1), based on at least one of the first specification, the second specification, the first time (11), the second time (t2), and a time interval between the first and the second time, and wherein
the instruction is further based on the at least one AI/ML generated specification.

10. The method (100) of any one of the previous claims, the method (100) further comprising:
- obtaining a third signal (S3) at a third time (t3) later than the first time (11) and the second time (t2), the third signal (S3) being indicative of a third specification relating to a user (2) of the vehicle (1), the third specification being at least one from a user characteristic, a user position, a user movement, and a user interaction with the vehicle (1),
the instruction (INS) being further based on the third signal (S3).

11. The method (100) of claim 10, the first signal (S1) being a stored signal from a previous usage event of the vehicle (1), and the second signal (S2) and the third signal (S3) being from an ongoing usage event of the vehicle (1).

12. The method (100) of any one of the previous claims, the first time (11) and the second time (t2) being from different usage events of the vehicle (1), the different usage events being from at least two of: an approaching the vehicle event, an entering the vehicle event, a starting the vehicle event, a driving event, a parking event, a turning off the vehicle event and a leaving the vehicle event.

13. A computer program product (12) comprising instructions which, when executed by a data processing apparatus (10) cause the data processing apparatus (10) to carry out the method (100) of any one of claims 1 to 12.

14. A data processing apparatus (10) comprising means for carrying out the method (100) of any one of claims 1 to 12.

15. A vehicle (1) comprising the data processing apparatus (10) of claim 14.

## Amended claims

### Amended claims in accordance with Rule 137(2) EPC.

1. A computer-implemented method (100) for controlling a system (20) of a vehicle (1), the method (100) comprising:
- obtaining a first signal (S1) at a first time (t1), the first signal (S1) being indicative of a first specification relating to a user (2) of the vehicle (1), the first specification being at least one from a user characteristic, a user position, a user movement, and a user interaction with the vehicle (1),
- obtaining a second signal (S2) at a second time (t2) later than the first time (t1), the second signal (S2) being indicative of a second specification relating to the user (2) of the vehicle (1), the second specification being at least one from a user characteristic, a user position, a user movement, and a user interaction with the vehicle (1), the second specification being different from the first specification, and
- providing an instruction (INS) for controlling the system (20) of the vehicle (1) based on the first specification, the second specification, the first time (t1), and the second time (t2),
**characterized in that**:
• the method (100) further comprises obtaining a third signal (S3) at a third time (t3) later than the first time (t1) and the second time (t2), the third signal (S3) being indicative of a third specification relating to a user (2) of the vehicle (1), the third specification being at least one from a user characteristic, a user position, a user movement, and a user interaction with the vehicle (1), the instruction (INS) being further based on the third signal (S3), and the first signal (S1) being a stored signal from a previous usage event of the vehicle (1), and the second signal (S2) and the third signal (S3) being from an ongoing usage event of the vehicle (1);
and/or
• the first time (t1) and the second time (t2) being from different usage events of the vehicle (1), the different usage events being from at least two of: an approaching the vehicle event, an entering the vehicle event, a starting the vehicle event, a driving event, a parking event, a turning off the vehicle event and a leaving the vehicle event.

2. The method (100) of claim 1, the first signal (S1) being a stored signal used for controlling a second system (21) of the vehicle (1).

3. The method (100) of claim 1 or 2, the first signal (S1) being indicative of the first interaction of the user (2) with a first unit (30) of the vehicle (1), and the second signal (S2) being indicative of the second interaction of the user (2) with a second unit (31) of the vehicle (1).

4. The method (100) of any one of the previous claims, the first signal (S1) being from a first sensor (40) of the vehicle (1), and the second signal (S2) being from a second sensor (41) of the vehicle (1).

5. The method (100) of claim 4, the first sensor (40) and the second sensor (41) being from different sensor types.

6. The method (100) of claim 4 or 5, the first sensor (40) and the second sensor (41) being from different units (30, 31, 32, 33) of the vehicle (1).

7. The method (100) of any one of the previous claims, the instruction (INS) being further based on a time interval between the first time (t1) and the second time (t2).

8. The method (100) of any one of the previous claims, the providing of the instruction (INS) comprising:
- obtaining one, from at least two, stored data sets relating to different users (2) based on the first signal (S1) and the second signal (S2), the obtained data set being indicative of at least one setting of the system (20),
the instruction (INS) comprising the at least one setting of the system (20).

9. The method (100) of any one of the previous claims, the method (100) further comprising:
- obtaining at least one Artificial Intelligence (AI) / Machine Learning (ML) generated specification relating to the user (2) of the vehicle (1), the AI generated specification being at least one from a user characteristic, a user position, a user movement, and a user interaction with the vehicle (1), based on at least one of the first specification, the second specification, the first time (t1), the second time (t2), and a time interval between the first and the second time, and wherein
the instruction is further based on the at least one AI/ML generated specification.

10. A computer program product (12) comprising instructions which, when executed by a data processing apparatus (10) cause the data processing apparatus (10) to carry out the method (100) of any one of claims 1 to 9.

11. A data processing apparatus (10) comprising means for carrying out the method (100) of any one of claims 1 to 9.

12. A vehicle (1) comprising the data processing apparatus (10) of claim 11.
